(19) Europäisches Patentamt
European Patent Office
Office européen des brevets

(11) Veröffentlichungsnummer: **0 382 003 A2**

(12) # EUROPÄISCHE PATENTANMELDUNG

(21) Anmeldenummer: **90101432.4**

(51) Int. Cl.⁵: **C23D 5/04, C04B 41/87**

(22) Anmeldetag: **25.01.90**

(30) Priorität: **07.02.89 IT 1932989**

(43) Veröffentlichungstag der Anmeldung: **16.08.90 Patentblatt 90/33**

(84) Benannte Vertragsstaaten: **DE ES FR GB IT NL**

(71) Anmelder: **BAYER ITALIA S.p.A.**
**Viale Certosa 126**
**I-20156 Milano(IT)**

(72) Erfinder: **Zybell, Paul**
**Via Monte Cleno 7**
**Dalmine(IT)**
Erfinder: **Broggi, Giovanni**
**Via Trenno 144**
**Milano(IT)**

(74) Vertreter: **Braun, Rolf, Dr. et al**
**Bayer AG Konzernverwaltung RP**
**Patentabteilung**
**D-5090 Leverkusen, Bayerwerk(DE)**

(54) **Keramikpulver für den elektrostatischen Pulverauftrag und Verfahren zu deren Herstellung.**

(57) Die vorliegende Erfindung betrifft Keramikpulver für den elektrostatischen Pulverauftrag auf keramischen Teilen mit einer mit elektrisch isolierenden Substanzen behandelten Oberfläche und ein Verfahren zu deren Herstellung.

EP 0 382 003 A2

## Keramikpulver für den elektrostatischen Pulverauftrag und Verfahren zu deren Herstellung

Die vorliegende Erfindung betrifft Keramikpulver für den elektrostatischen Pulverauftrag auf keramische Teile und ein Verfahren zu deren Herstellung.

Es ist bekannt, daß sich Emailpulver elektrisch aufladen und im elektrischen Feld mit einer Potentialdifferenz von ca. 60 000 bis 100 000 Volt auf metallische Unterlagen aufbringen lassen. Zu diesem Zweck werden die Kornoberflächen der Emailpulver mit isolierenden Substanzen überzogen, die in einer Menge von 0,1 bis 2,0 Gew.-% den Emailfritten vor oder während der Trockenvermahlung zugesetzt werden, um einen spezifischen elektrischen Widerstand von $10^{12}$ bis $10^{16}$ Ohm•cm zu erzielen. Als isolierende Substanzen werden Silanole, Isocyanate, Siliciumstickstoffverbindungen, Karbodiimide, Chlorsilane und Organopolysiloxane eingesetzt (DE-OS 2 015 072).

Die Beschichtung von keramischen Oberflächen erfolgt entweder im Naßauftrag mittels Gießen, Spritzen, Sprenkeln und Schleudern bzw. Abwandlungen dieser Techniken oder aber im Trockenverfahren, wobei ein Keramikgranulat oder -pulver auf ein vorgeheiztes Substrat durch Sieben, Pudern oder Schütten aufgebracht wird, so daß das keramische Korn noch während des Auftrages anschmilzt, somit auf dem Substrat haftet und bei der nachfolgenden Wärmebehandlung glatt fließt.

Keramische Pulver lassen sich auch elektrostatisch auf keramische Oberflächen auftragen, wobei jedoch die Pulverhaftung derart gering ist, daß eine Hantierung der Teile vor dem Sinter- und Brennprozeß praktisch nicht möglich ist, da das Pulver von den Teilen abfällt.

Aufgabe war es daher, keramische Pulver zur Verfügung zu stellen, die elektrostatisch auf keramische Oberflächen aufgebracht werden können und eine gute Haftung auf der keramischen Oberfläche aufweisen.

Diese Aufgabe konnte mit den erfindungsgemäßen keramischen Pulvern gelöst werden.

Gegenstand der Erfindung sind Keramikpulver für den elektrostatischen Pulverauftrag auf keramischen Teilen mit einer mit elektrisch isolierenden Substanzen behandelten Oberfläche, die dadurch gekennzeichnet sind, daß die elektrisch isolierenden Substanzen halogenfreie Polysiloxane oder Gemische davon sind und mit ihren reaktiven Gruppen an den Kornoberflächen der Keramikpulver reagieren und in einer Menge von 0,05 -0,1 Gew.-%, bezogen auf das Keramikpulver vorliegen und daß das Keramikpulver, welches bei einer Mahltemperatur von 70 bis 100 °C gemahlen, beziehungsweise im Falle einer Kaltvermahlung zwischen 70 °C und 300 °C thermisch nachbehandelt wurde, eine Mahlfeinheit von 1 bis 100 $\mu$, einen spezifischen elektrischen Widerstand von $10^{12}$ bis $10^{16}$ Ohm.cm und einen kubischen Wärmeausdehnungskoeffizienten von (130-230)•$10^{-7}K^{-1}$ aufweist.

Bevorzugt sind Keramikpulver, die mit Polymethylhydrogensiloxanen der Formel

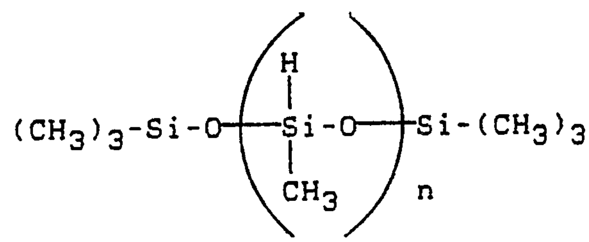

mit n = 5 - 50 oder Gemischen davon behandelt werden.

Ein weiterer Gegenstand der Erfindung ist ein Verfahren zur Herstellung der erfindungsgemäßen Keramikpulver, welches dadurch gekennzeichnet ist, daß die den Pulvern entsprechenden Keramikfritten vor oder während der bei 70 bis 100 °C durchzuführenden trockenen Mahlung, beziehungsweise vor oder während der Kaltvermahlung mit anschließender zwischen 70 °C und 300 °C durchzuführenden thermischen Nachbehandlung mit 0,05 bis 0,1 Gew.-%, bezogen auf die Fritte, halogenfreien mit ihren reaktiven Gruppen an den Kornoberflächen der Frittenteilchen reagierenden Polysiloxanen oder Gemischen davon behandelt werden und zu Pulvern mit einer Korngroße von 1 bis 100 $\mu$, einem spezifischen elektrischen Widerstand von $10^{12}$ bis $10^{16}$ Ohm•cm und einem kubischen Wärmeausdehnungskoeffizienten von (130-230) • $10^{-7}K^{-1}$ aufgemahlen werden.

In einer bevorzugten Verfahrensweise werden die den Pulvern entsprechenden Keramikfritten mit Polymethylhydrogensiloxanen der Formel

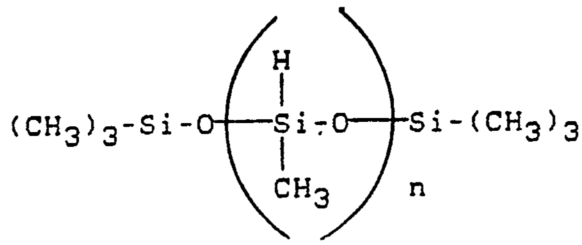

mit n = 5 - 50 oder Gemischen davon behandelt.

Die erfindungsgemäßen Keramikpulver werden für den elektrostatischen Pulverauftrag auf keramische Teile verwendet.

Die erfindungsgemäße elektrostatische Trockenpulverbeschichtung hat gegenüber anderen Techniken erhebliche Vorteile:

So entfällt die Naßvermahlung der Keramikfritten, z.B. für die Technik des Naßauftrags, bei der wäßrige Suspensionen entstehen, die nur über Zusätze von Ton und Elektrolyten die geforderte Konsistenz des Schlickers erhalten. Der Trockenprozeß, um die aufgetragenen Schlickerschichten vor dem Einbrand zu entwässern, ent fällt ebenfalls. Dies bedeutet eine Vereinfachung des Arbeitsablaufs und eine beachtliche Energieeinsparung für das erfindungsgemäße elektrostatische Auftragsverfahren.

Darüber hinaus ergibt sich ein wesentlich geringerer Materialverbrauch, da das nach dem erfindungsgemäßen Verfahren behandelte Keramikpulver in elektrostatischen Auftragskabinen mit einem Wirkungsgrad von > 99 % abgeschieden wird.

Beim elektrostatischen Auftrag bleiben die Pulver außerdem in einem geschlossenen System, und die aus der Kabine austretende Luft wird über Filter gereinigt. Ein derartiges, geschlossenes System ist weder beim Naßauftrag noch beim Trockenverfahren mittels Sieben oder Schütten von Keramik-Granulaten oder -Pulvern gegeben. Da die Keramikfritten in der Regel bleihaltig sind, erfordern die konventionellen Auftragssysteme erhöhte Sicherheitsvorkehrungen.

Voraussetzung für eine elektrostatische Pulverbeschichtung auf keramischen Oberflächen sind allerdings Keramikpulver, die eine elektrostatische Beschichtung ermöglichen und auf dem Keramiksubstrat gut haften. Diese Bedingungen werden von den erfindungsgemäßen Keramikpulvern erfüllt.

Die Erfindung soll anhand nachfolgender Beispiele näher erläutert werden, ohne daß hierin eine Einschränkung zu sehen ist.

## Beispiel 1

Eine 1 000 kg-Mühle wird wie folgt beladen:

1 850 kg Alubit-Kugeln mit einem Durchmesser von 32 bis 45 mm,
1 000 kg einer handelsüblichen Fritte in Schuppen- oder Granalienform, bestehend aus
64 Gew.-% PbO,
33 Gew.-% $SiO_2$ und
3 Gew.-% $Al_2O_3$,
0,5 kg Gemisch von Polymethylhydrogensiloxanen (= 0,05 Gew.-%) der Formel

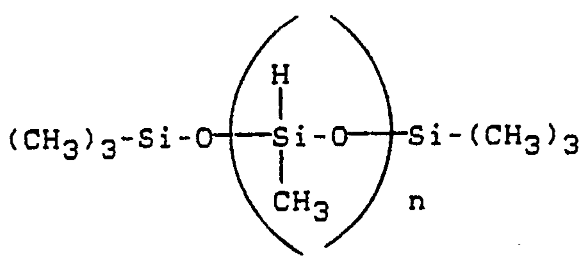

mit n = 5 - 25

Vor dem Schließen der Kugelmühle wird der Innenraum mit Stickstoffgas gespült, um den Sauerstoff zu eliminieren.

Die Keramikfritte wird ca. 6 bis 7 Stunden gemahlen, um die gewünschte Mahlfeinheit zu erreichen, d.h. eine Kornverteilung von

100 Gewichtsprozent unter 100 mikron
ca. 80 Gewichtsprozent unter 40 mikron
ca. 60 Gewichtsprozent unter 25 mikron
ca. 40 Gewichtsprozent unter 15 mikron

Während der Vermahlung steigt die Temperatur im Innern der Mühle auf ca. 80° C.

Das nach der Vermahlung entladene Pulver weist einen spezifischen Widerstand von $10^{16}$ Ohm•cm auf, ein Fließverhalten von 50 bis 80 g/30 sec, gemessen mit einem Gerät der Fa, Sames und einem kubischen Wärmeausdehnungskoeffizienten von (180-200)•$10^{-7}K^{-1}$.

Die Bestimmung der Fluidität erfolgt mit einem Gerät der Fa. Sames, Grenoble. Die Meßmethode wird in einer Veröffentlichung von Dr, H.J. Schittenhelm im Journal des VDEFa, Band 32 (1984), Heft 10, Seiten 137 - 148 ausführlich beschrieben.

Der optimale Fließwert für den elektrostatischen Auftrag liegt zwischen 50 und 90 g/30 sec. Werte unter 50 g/sec und speziell unter 40 g/30 sec sind als kritisch zu betrachten, insoweit als sie Auftragsschwierigkeiten verursachen aufgrund mangelnden Fließverhaltens.

Beispiel 2

Die Vermahlung erfolgt in einer 1 kg-Mühle, die mit 1 000 g der in Beispiel 1 beschriebenen Fritte und 5 kg Mahlkugeln aus Steatit mit einem Durchmesser von 15 bis 25 mm sowie 0,8 g (0,08 Gew.-%) Polymethylhydrogensiloxangemisch beladen wird, Die Trockenvermahlung bis zur vorgegebenen Korngrößenverteilung wie unter Beispiel 1 beschrieben erfolgt innerhalb von 5 Stunden. Die Temperatur des Mahlgutes während der Mahlung liegt etwa bei Zimmertemperatur. Der spezifische Widerstand beträgt $10^{15}$ Ohm•cm, das Fließverhalten liegt bei 0 g/30 sec.

Das Material ist für einen elektrostatischen Auftrag nicht geeignet. Wird dieses Pulver thermisch nachbehandelt, z.B. bei 150° C über 6 Stunden, dann steigt der Fließwert auf etwa 70 g/30 sec. an, und das Material läßt sich einwandfrei verarbeiten.

Beispiel 3

Die Vermahlung erfolgt analog dem Beispiel 2 mit dem Unterschied, daß die 1 kg-Mühle vorgewärmt und während des Mahlvorganges von außen beheizt wird, so daß das Mahlgut während der Mahlung eine Temperatur von ca. 70° C aufweist. Nach Erreichen der Korngrößenverteilung wie in Beispiel 1 beschrieben zeigt das Keramikpulver einen Widerstand von $10^{16}$ Ohm•cm und ein Fließverhalten von 65 g/30 sec nach dem Sames-Test. Dieses Material läßt sich auf elektrostatischem Wege einwandfrei auftragen.

Beispiel 4

Die Vermahlung erfolgt analog dem Beispiel 1 mit dem Unterschied, daß 1 000 g einer handelsüblichen Keramikfritte eingesetzt werden, die folgende Zusammensetzung aufweist:

| | |
|---|---|
| $SiO_2$ | 53 Gew.-% |
| $Al_2O_3$ | 8 Gew.-% |
| $B_2O_3$ | 9 Gew.-% |
| ZnO | 10 Gew.-% |
| CaO | 8 Gew.-% |
| MgO | 3 Gew.-% |
| $K_2O$ | 4 Gew.-% |
| $ZrO_2$ | 5 Gew.-% |

Nach dem Erreichen der Korngrößenverteilung, wie in Beispiel 1 beschrieben, zeigt das Mahlgut einen spez. Widerstand von $10^{15}$ Ohm•cm und ein Fließverhalten von 80 g/30 sec. Das Keramikpulver ist für den elektrostatischen Auftrag gut geeignet und kann auf ungebrannten Scherben aufgeschmolzen werden.

Anstelle der diskontinuierlichen Kugelmühlen können kontinuierliche Mahlaggregate verwendet werden

wie z.B. Schwing- oder Hardinge-Mühlen. Erstere entwickeln eine Mahltemperatur von ca. 100° C während letztere von außen beheizt werden müssen, um die erforderliche Reaktionstemperatur von 70 - 100° C zu erzielen. In beiden Fällen muß eine Mischmühle, die mit wenigen Schwermahlkugeln beladen ist, vorgeschaltet werden, um eine Homogenisierung der zu mahlenden Keramikfritten mit dem Inkapsulationsöl zu gewährleisten.

## Ansprüche

1. Keramikpulver für den elektrostatischen Pulverauftrag auf keramischen Teilen mit einer mit elektrisch isolierenden Substanzen behandelten Oberfläche, dadurch gekennzeichnet, daß die elektrisch isolierenden Substanzen halogenfreie Polysiloxane oder Gemische davon sind und mit ihren reaktiven Gruppen an den Kornoberflächen der Keramikpulver reagieren und in einer Menge von 0,05 bis 0,1 Gew.-%, bezogen auf das Keramikpulver, vorliegen und daß das Keramikpulver, welches bei einer Mahltemperatur von 70 bis 100° C gemahlen, beziehungsweise im Falle einer Kaltvermahlung zwischen 70° C und 300° C thermisch nachbehandelt wurde, eine Mahlfeinheit von 1 bis 100 µ, einen spezifischen elektrischen Widerstand von $10^{12}$ bis $10^{16}$ Ohm•cm und einen kubischen Wärmeausdehnungskoeffizienten von (130-230)•$10^{-7}K^{-1}$ sowie eine Fluidität von 50-90 g/30 sec. aufweist.

2. Keramikpulver nach Anspruch 1, dadurch gekennzeichnet, daß als Polysiloxane Polymethylhydrogensiloxane der Formel

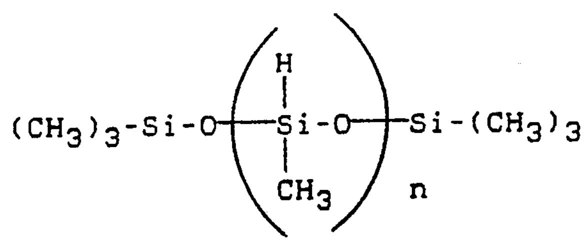

mit n = 5 - 50 oder Gemische davon eingesetzt werden.

3. Verfahren zur Herstellung von Keramikpulver nach Anspruch 1 oder 2 mit einer mit elektrisch isolierenden Substanzen behandelten Oberfläche, dadurch gekennzeichnet, daß die den Pulvern entsprechenden Keramikfritten vor oder während der bei 70 bis 100° C durchzuführenden trockenen Mahlung, beziehungsweise vor oder während der Kaltvermahlung mit anschließender zwischen 70° C und 300° C durchzuführenden thermischen Nachbehandlung mit 0,05 bis 0,1 Gew.-% halogenfreien mit ihren reaktiven Gruppen an den Kornoberflächen der Frittenteilchen reagierenden Polysiloxanen oder Gemischen davon, bezogen auf die Fritte, behandelt werden und zu Pulvern mit einer Korngröße von 1 bis 100 µ, einem spezifischen elektrischen Widerstand von $10^{12}$ bis $10^{16}$ Ohm•cm und einem kubischen Wärmeausdehnungskoeffizienten von (130 bis 230)•$10^{-7}K^{-1}$ aufgemahlen werden.

4. Verfahren zur Herstellung von Keramikpulvern gemäß Anspruch 3, dadurch gekennzeichnet, daß die den Pulvern entsprechenden Fritten mit Polymethylhydrogensiloxanen der Formel

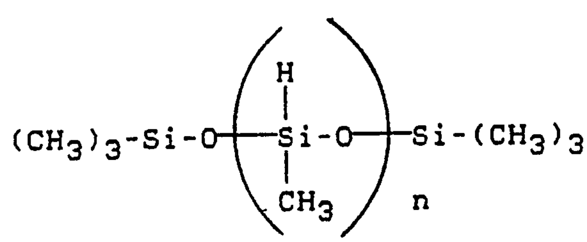

mit n = 5 - 50 oder Gemischen davon behandelt werden.

5. Verwendung der Keramikpulver nach Anspruch 1 oder 2 für den elektrostatischen Pulverauftrag auf keramischen Teilen.